# EUROPEAN PATENT APPLICATION

(11) **EP 1 364 850 A1**
(43) Date of publication of application: **26.11.2003**
(21) Application number: 03010561.3
(22) Date of filing: 12.05.2003
(51) Int. Cl.: B60T 13/74, B60T 7/10

(54) **An electromechanical actuator device incorporating a torque transducer**

(30) Priority: 13.05.2002 IT TO20020408
(71) Applicant: Sila Holding Industriale S.p.A., 10042 Nichelino(Torino) (IT)
(72) Inventor: Mourad, Kamal, 10123 Torino (IT); Gardiol, Marco, 10060 San Secondo di Pinerolo (Torino) (IT); Melis, Salvatore, 10098 Rivoli (Torino) (IT)
(74) Representative: Quinterno, Giuseppe

(57) **Abstract**

The device (1) comprises:
a rotary drive motor (2),
a speed reducer (4) of epicyclic type including an input shaft (3), and output shaft (9) and a rotatable outer body (10) coaxial with the input and output shafts (3, 9) and with which is associated a resilient biasing member (16) operable to oppose its rotation; the input shaft (3) being coupled for rotation to the motor output shaft (2) and having an output shaft (9) coupled operatively to a load;
an electric transducer (21; 26, 27) operable to provide signals indicative of the magnitude of the load applied to the output shaft (9) of the speed reducer (4); and
a control and command unit (ECU) arranged to pilot the motor (2) in a predetermined manner.

## Description

The subject of the present invention is an electromechanical actuator device with an incorporated torque transducer, usable for example in the automobile field for providing servo-assistance for the motor vehicle parking brake.

The use of transducer devices, such as load cells, is known for the measurement of a torque or a load.

Load cells require the use of electronic measurement circuits with characteristics adapted to the treatment of very weak signals. Load cells have, moreover, significant dimensions and costs, above all with regard to possible use in the automobile field, where the environmental operating characteristics are rather severe, also from the electromagnetic point of view.

The object of the present invention is to provide an electromechanical actuator device with an incorporated torque transducer, which will be simple and economic to produce and which will have a highly reliable operation, and dimensions and costs compatible with use in the automobile field in particular.

This and other objects are achieved according to the invention with an electromechanical actuator device the salient characteristics of which are defined in Claim 1 which follows the present description.

Further characteristics and advantages of the device according to the invention will become apparent from the following detailed description made with reference to the attached drawings, provided purely by way of non limitative example, in which:
Figure 1 is a perspective view of a drive unit comprised within an actuator device according to the invention;
Figure 2 is another perspective view of the actuator unit of Figure 1;
Figure 3 shows, in perspective view, an example of use of a device according to the invention; and
Figure 4 is an electric diagram, partly in block diagram form, of an actuator device according to the invention.

With reference to the drawings, and in particular to Figures from 1 to 3, an actuator device according to the invention comprises a drive unit generally indicated 1.

The unit 1 comprises a rotary electric motor 2 such as a DC electric motor the output shaft of which is coupled to the input shaft 3 of a speed reducer 4 by means of a belt transmission generally indicated 5. This latter, in a manner known per se, comprises a drive pulley 6 fitted to the drive shaft of the electric motor 2, and a driven pulley 7 fitted to the input 3 of the speed reducer 4 and coupled to the pulley 6 by means of a belt 8.

The speed reducer 4 is conveniently a reduction gearbox of epicyclic type having one or more stages.

The speed reducer 4 has an output shaft 9 fixed to the planet carrier of such reducer (or fixed to the planet carrier of the last stage of the reducer in the case of a multistage reducer).

A rotatable outer body of the speed reducer 4 is indicated 10, coaxial with the input shaft 3 and output shaft 9. The outer body 10 has an internal toothing which is not visible in the drawings, but is known per se, which meshes with the planets of the reduction gear (or the last stage of the reduction gear).

The electric motor 2 and the speed reducer 4 are fixed, with their respective axis parallel, to the same support structure which is only partially illustrated in the drawings where it is indicated 11.

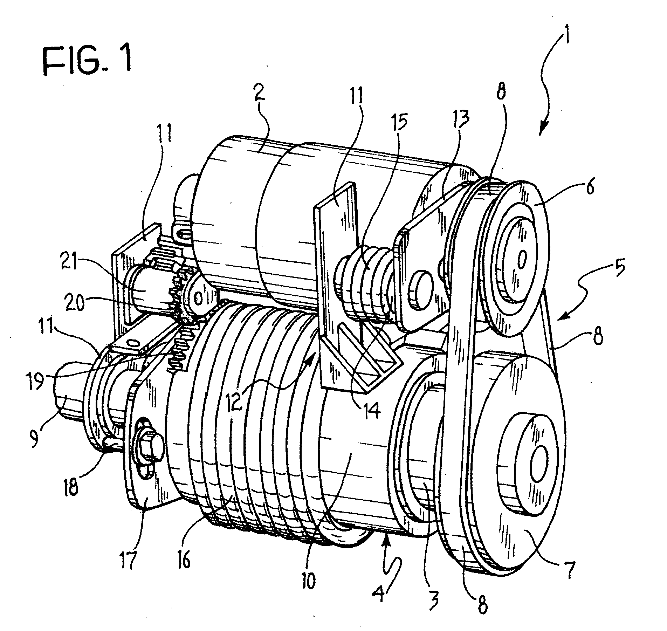

Associated with the belt transmission 5 is a tensioner device generally indicated 12 in Figure 1 and comprising, in a manner known per se, a tensioner arm 13 articulated rotatably to the support structure 11 on a pin 14 about which is disposed a torsion spring 15 which has one end secured to the structure 11 and the other end fixed to the arm 13 at a predetermined distance with respect to its pivot axis.

A further torsion spring which is disposed around the outer rotary body 10 of the epicyclic speed reducer 4 is indicated with reference numeral 16.

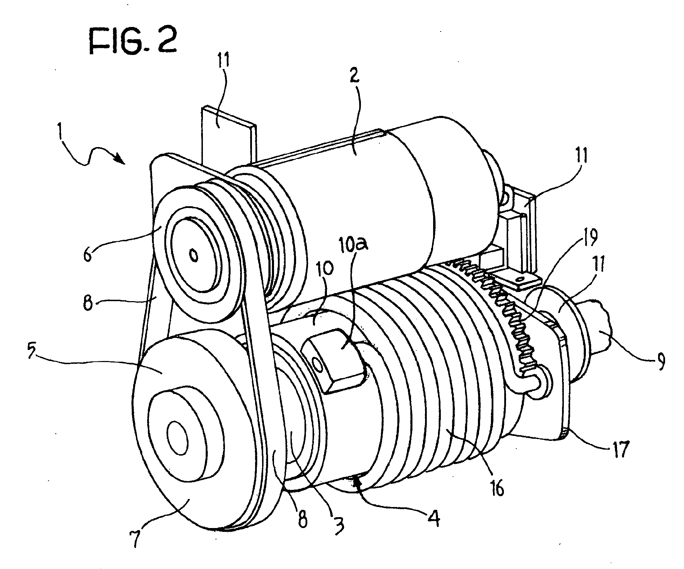

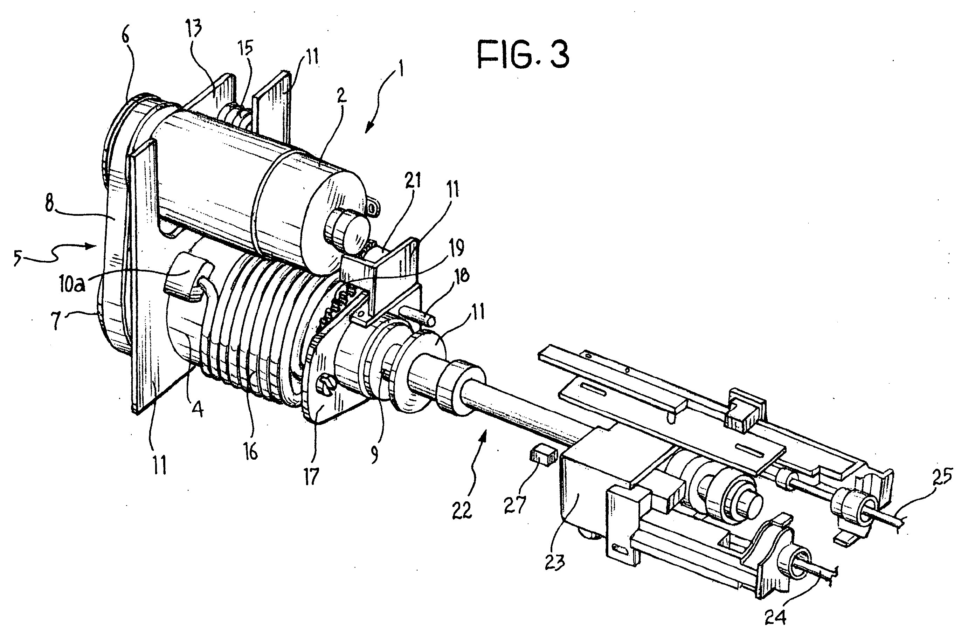

As is seen in Figures 2 and 3, the spring 16 has one end fixed in a protuberance 10a of the said body 10 and the other end fixed to a plate 17 rotatably mounted about the output shaft of the speed reducer 4 and capable of being operatively fixed to the support structure 11 in a predetermined position by means of a screw 18 (Figures 1 and 3).

The biasing spring 16 tends to oppose rotation of the outer body 10 of the speed reducer 4.

The end of the body 10 of the speed reducer 4 remote from the drive pulley 7 has a set of external teeth 19 which mesh with a toothed wheel 20 (Figure 1) fitted on a small drive shaft of an electric angular position transducer 21 fixed to the support structure 11.

In operation, when the electric motor 2 is supplied with a constant voltage it generates a drive torque which, via the pulleys 6 and 7 and the transmission belt 8, is transferred to the input shaft 3 of the speed reducer 4. The rotational mechanism of which it is constituted, causes the output shaft 19 of this latter to rotate at a lower speed delivering a correspondingly increased drive torque.

By reaction the outer body 10 of the speed reducer 4 is driven to rotate against the action of the biasing spring 16. This body 10 of the speed reducer 4 can perform an angular rotation about its longitudinal axis between two limits defined by means of mechanical stops (not illustrated) one of which corresponds to the rest position (absence of torque at the input of the speed reducer), whilst the other corresponds to the maximum torque transmissible by the device.

Rotation of the outer body 10 of the speed reducer 4 by means of the teeth 19 thereof is transmitted to the toothed wheel 20 fitted to the drive shaft of the angular position transducer 21.

If the electric motor 2 is supplied with a constant electric voltage there is a corresponding drive torque at the output shaft 19 of the unit 1 and, by the effect of the power transmitted, as is explained in more detail above, the body 10 of the speed reducer 4 assumes a relative angular position different from that assumed in the rest condition. This position is detected and signalled by the angular position transducer 21. The electric signal provided by this transducer can be utilised by an electric control and command unit in ways which will be described better hereinafter.

Assuming now that, for example, an increase of the resistant torque applied to the output shaft 9 of the unit 1 occurs, the mechanical balance of this unit is perturbed. Because of this the drive motor 2 is progressively slowed. The number of revolutions in unit time of the output shaft 9 thus reduces and the torque correspondingly increases until reaching the new balance conditions.

The increase of the torque transmitted involves an increase of the reaction torque exerted on the body 10 of the speed reducer 4, which involves an additional torsion of the biasing spring 16. This increase of torsion of the spring converts into an increase of the relative angular rotation of the body 10 of the speed reducer 4 which is correspondingly signalled by the transducer 21.

If, on the other hand, a reduction in the resistant torque applied to the output shaft 9 occurs, there is a consequent effective reversal with respect to what has been described in relation to the condition of an increase in resistant torque.

From what has been explained above it is apparent how the angular position transducer 21 is capable of providing in operation signals indicative of the magnitude of the load (resistant torque) applied to the output shaft 9 of the speed reducer 4 or rather the unit 1.

In Figure 3 is shown by way of example an application of the drive unit 1 described above. In this application the output shaft 9 of the said unit is coupled to a device 22 operable to convert its rotary motion into a linear motion. The device 22 is for example of the lead screw type. The output end of the device 22, which is operatively driven to linear motion, is coupled to a structure 23 to which are connected flexible force transmission cables 24 and 25 connected (in a manner not illustrated) for example to brake actuators associated with the motor vehicle wheels.

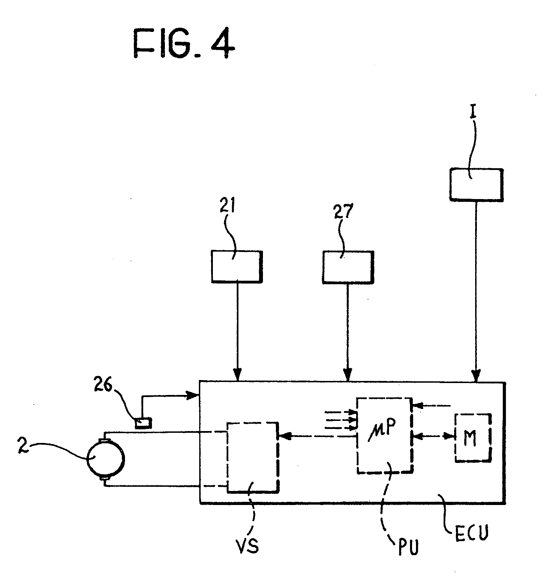

As is schematically illustrated in Figure 4, the electric motor 2 is connected to an electronic control and command unit generally indicated ECU. This unit comprises for example a controlled power supply circuit VS coupled to the terminals of the electric motor 2 in order to apply to them a supply voltage corresponding to the desired torque.

The angular position transducer 21 is coupled likewise to the unit ECU. This latter may comprise a processor unit PU including, for example, a microprocessor, and associated memory device M. The processor unit PU can be arranged to compare the information arriving, in operation, from the transducer 21 which, as previously mentioned, is essentially indicative of the resistant load applied to the drive unit 1, with a torque demand to be applied to the load, the demand arriving from an input device indicated I in Figure 4. On the basis of this comparison the processor unit PU correspondingly pilots the voltage supply VS.

As an alternative to the use of an angular position transducer the electric motor 2 could be associated with a current sensor such as that indicated 26 in Figure 4, for example a Hall effect sensor or a shunt resistor operable to provide the unit ECU with signals indicative of the magnitude of the current consumed in operation by the said motor.

Theoretically, the relation between the current consumed by the electric motor 2 and the resistant torque applied to the drive unit 1 is of an invariable type. In practice this is not true in that, upon starting, the current consumed by the motor 2 typically presents a peak with values which are confusable with those corresponding to the final resistant torque. In order to remedy this the biasing spring 16 associated with the speed reducer 4 can be suitably pre loaded in such a way that it does not allow movement of the body 10 of this speed reducer during acceleration of the electric motor 2. An alternative solution, of electric type, consists in starting to "read" the signal provided by the current sensor 26 only after a predetermined time from start up of the motor 2 and sufficient to ensure completion of the initial transient of the current consumed.

In an application such as that shown by way of example in Figure 3, in which the drive unit is disposed at a significant distance from the point of application of the force or torque developed, the indication provided by the angular position sensor or by the current consumption sensor is influenced by the performance of the whole kinematic chain, that is by the system for transmission of the force or torque. During installation of the device it is possible therefore to provide for a recalibration of the characteristic of the spring 16 associated with the speed reducer 4. One possibility consists in arranging for the fixing screw 18 to pass through a slotted aperture of the plate 17 so as to allow the end of the spring 16 which is connected to the said plate 17 to be fixed in different positions.

If it is desired to avoid a recalibration of the said spring the electronic control unit ECU can be arranged to perform an initial calibration procedure with the actuator device 1 mounted on a test bed and a possible subsequent calibration procedure in the installed condition of use of the said actuator device.

For calibration the drive unit 1 is mounted on a test bed in a situation which corresponds to the final application. The output shaft of this unit has loads applied thereto that is to say resistant torques of predetermined values. The processor unit PU acquires and memorises for each of these reference loads the corresponding values of the angular position of the body of the speed reducer, or of the current consumed by the electric motor.

After calibration, in normal operation of the processor unit PU, and in order to satisfy the specific operating requirements of torque to be applied, it is convenient to provide for calculation, for example by means of interpolation and/or extrapolation, the values of the angular position of the outer body of the speed reducer or of the current consumed by the electric motor corresponding to values of load or torque different from those of the reference loads utilised in the calibration procedure.

With reference to Figure 3, a supplementary linear position sensor 27 can be utilised for greater security (see also Figure 4) positioned close to the output end of the rotary/linear motion converter 22 and connected to the control unit ECU and in particular to the processor unit PU thereof. In this case the processor unit PU is conveniently arranged to perform a calibration procedure with the drive unit 1, the converter 22 and the other devices connected to it when installed in the position of use. In this calibration procedure the processor unit PU, whilst being made to vary the load (resistant torque) applied to the entire device, stores in the memory device M data indicative of the position values indicated by the sensor 27 when the current consumed by the electric motor 2 assumes the values memorised in the preceding calibration phase. In this case, too, the PU unit is then conveniently arranged to calculate, in normal operation, the linear position values which correspond to different load values from those of the said reference loads, for example by means of interpolation and/or extrapolation procedures known per se.

Subsequently, during the useful life of the system, the relation between the linear position and load (torque or resistant force) can change by the effect of wear and adjustment. The processor unit PU can then be conveniently arranged to periodically update the linear position/memorised load characteristic.

Naturally, the principle of the invention remaining the same, the embodiments and details of construction can be widely varied with respect to what has been described and illustrated purely by way of non-limitative example, without by this departing from the ambit of the invention as defined in the annexed claims.

## Claims

1. An electromechanical actuator device (1) comprising:
a rotary drive motor (2),
a speed reducer (4) of epicyclic type comprising an input shaft (3), an output shaft (9) and a rotatable outer body (10) coaxial with the said input and output shafts (3, 9) and with which are associated resilient biasing means (16) operable to oppose its rotation; the input shaft (3) being coupled for rotation with the output shaft of the motor (2) and having an output shaft (9) operatively coupled to a load;
electric transducer means (21; 26; 27); operable to provide signals indicative of the magnitude of the load applied to the output shaft (9) of the speed reducer (4); and
control and command means (ECU) arranged to pilot the motor (2) in a predetermined manner.

2. A device according to Claim 1, in which the said motor is a DC electric motor (2) the output shaft of which is coupled to the input shaft (3) of the speed reducer (4) by means of a transmission, for example a belt or toothed wheel (5; 6-8).

3. A device according to Claim 1, in which the rotary outer body (10) of the reducer (4) has a toothing (19) at the end opposite the coupling region between the motor (2) and the said speed reducer (4), which meshes with a rotary member (20) associated with the said angular position transducer (21).

4. A device according to Claim 1, in which the said transducer comprise an electric angular position sensor (21) operable to provide electrical signals indicative of the angular position of the said body (10) of the epicyclic reducer (4).

5. A device according to Claim 1 or Claim 3, in which the said resilient biasing means comprise a torsion spring (16) having one end fixed to the said outer body (10) of the speed reducer (4) and the other end fixed to a stationary support structure (17, 11).

6. A device according to Claim 5, in which the said other end of the said spring (16) is fixed to the said support structure (11) in an adjustable position to allow calibration of the working characteristic of this spring (16).

7. A device according to any preceding claim, in which the said electric transducer means comprise a current sensor (26) operable to provide a signal indicative of the magnitude of the current consumed by the said motor (2).

8. A device according to Claim 1 or Claim 7, in which the said control and command means comprise memory means (M) and processor means (PU) arranged to perform a calibration procedure of the device (1), in which the said memory means (M) store data indicative of the values presented by a predetermined parameter of the signal provided by the said sensor (21; 26); when the device (1) has reference loads of predetermined magnitude applied to it.

9. A device according to Claim 8, in which the said processor means (PU) are arranged to calculate, in normal operation, by interpolation and/or extrapolation, the values of the said parameter of the said sensor signal (21; 26) corresponding to different load values from those of the said reference loads.

10. A device according to any preceding claim, in which the output shaft (9) of the speed reducer (4) is connected to a converter device (22) operable to convert rotary motion into linear motion.

11. A device according to Claims 7, 8 and 10, comprising electric linear position sensor means (27) associated with the output of the said converter device (22) and in which the control means (ECU) include memory means (M) and processor means (PU) arranged to perform, after completion of the said calibration procedure, a calibration procedure in which, whilst the load applied to the actuator device (1) varies, data indicative of the values presented by a parameter of the signal provided by the said linear position sensor means (27) when the current consumed by the motor (2) assumes the values memorised in the calibration phase are stored in the said memory means (M); the said processor means (PU) being arranged to calculate, in normal operation, the values of the said parameter of the signal provided by the linear position sensor means (27) corresponding to load values different from those of the said reference loads.
